# EUROPEAN PATENT APPLICATION

(11) **EP 1 243 460 A1**
(43) Date of publication of application: **25.09.2002**
(21) Application number: 02005343.5
(22) Date of filing: 14.03.2002
(51) Int. Cl.: B60M 1/23

(54) **Clamp for droppers of catenary cables for support and electric power supply in railroad lines, with highly practical installation**

(30) Priority: 19.03.2001 IT MI010572
(71) Applicant: Pfisterer S.r.l., 20094 Corsico (Milano) (IT)
(72) Inventor: Nannini, Osvaldo, 20146 Milano (IT)
(74) Representative: Modiano, Guido, Dr.-Ing.

(57) **Abstract**

A clamp (1) for droppers of catenary cables for support and electric power supply in railroad lines, comprising two bodies (2,3), respectively a first body (2) and a second body (3), which face each other and are mutually connected, in an intermediate region of their extension along one direction, by a connection and fastening element (4). The two bodies (2,3) form, proximate to one of their ends along said direction, a first engagement region for a first cable or rod element (6,7) and, proximate to the opposite end, a second engagement region for a second cable or rod element (9) whose axis is orientated substantially at right angles to the first element. One of the two bodies (2,3), when the connection and fastening element is not fastened, is able to rotate with respect to the other body about an axis that lies proximate to one of the two ends in order to move mutually closer or further apart the two bodies at the opposite end, The connection and fastening element (4) can be moved in order to move the two bodies mutually closer so as to stably fasten the cable or rod elements between the two bodies.

## Description

The present invention relates to a clamp for droppers of catenary cables for support and electric power supply in railroad lines.

It is known that in railroad lines the contact wire for the pantographs of electric locomotives is suspended from a support and electric power supply cable, which is arranged like a catenary curve by means of elements commonly known as droppers. These elements are generally constituted by a clamp, to be engaged with the support and electric power supply cable or catenary cable, and by another clamp, to be engaged with the contact wire; said clamps are connected one another by a flexible dropper wire, which also provides the electrical connection between the two clamps.

The two clamps are generally provided with a screw or bolt for fastening them onto the catenary cable or onto the contact wire, while the dropper wire is fixed to the clamps by compression, performing a plastic deformation, with an appropriate tool, of a perforated stem, which is rigidly coupled to the clamp and in which an end portion of the dropper wire is inserted beforehand.

These clamps for droppers have problems mainly due to the compression-type connection to the dropper wire.

Because such connection requires a perforated stem that is sized according to the diameter of the dropper wire to be received, it is necessary to provide a different type of clamp for each diameter of the dropper wire. Moreover, currently commercially available clamps are suitable to connect a very small number of combinations of contact wire and catenary cable.

The compression-type connection between the dropper wire and the clamp further forces to prepare in-factory all the segments of dropper wire, of various lengths, according to their position on the catenary cable and on the various spans. The dropper wire segments are then connected to the clamps by compression, and the droppers thus prepared and divided into bunches for each span are then transported and installed on the railroad line, tightening the bolts in order to fasten the contact wire and the catenary cable.

Any droppers that are found to have the wrong length during installation, due to errors in cutting the dropper wire or to unexpected situations on the line, can no longer be used due to the compression-type coupling and must therefore be disposed of as scrap. Furthermore, if unexpected situations arise during the laying of the line, it is necessary to cut dropper wire segments to size and perform the connections by means of a portable compression tool, with a considerable waste of time.

The aim of the present invention is to solve the above described problems, by providing a clamp for droppers of catenary cables for support and electric power supply in railroad lines that does not require preassembly with the dropper wire.

Within this aim, an object of the invention is to provide a clamp that makes it particularly simple and easy to install droppers.

Another object of the invention is to provide a clamp that reduces the production costs of droppers by eliminating the need for preassembly with the dropper wire.

Another object of the invention is to provide a clamp that is highly flexible in use, avoids rejects due to incorrect size of the dropper wires, or in any case reduces the financial losses arising from such rejects.

Another object of the invention is to provide a clamp that can be used for a wide range of sizes of dropper wires, catenary cables and contact wires.

This aim and these and other objects that will become better apparent hereinafter are achieved by a clamp for droppers of catenary cables for support and electric power supply in railroad lines, characterized in that it comprises two bodies, respectively a first body and a second body, which face each other and are mutually connected, in an intermediate region of their extension along one direction, by a connection and fastening element; said two bodies forming, proximate to one of their ends along said direction, a first engagement region for a first cable or rod element and, proximate to the opposite end, a second engagement region for a second cable or rod element whose axis is orientated substantially at right angles to said first cable or rod element; one of said two bodies, when said connection and fastening element is not fastened, being able to rotate with respect to the other body about an axis that lies proximate to one of said two ends in order to move mutually closer or further apart said bodies at the opposite end; said connection and fastening element being movable in order to move said two bodies mutually closer so as to stably fasten said cable or rod elements between said two bodies.

Further characteristics and advantages of the invention will become better apparent from the following detailed description of a preferred but not exclusive embodiment of the clamp according to the invention, illustrated only by way of non-limitative example in the accompanying drawings, wherein:

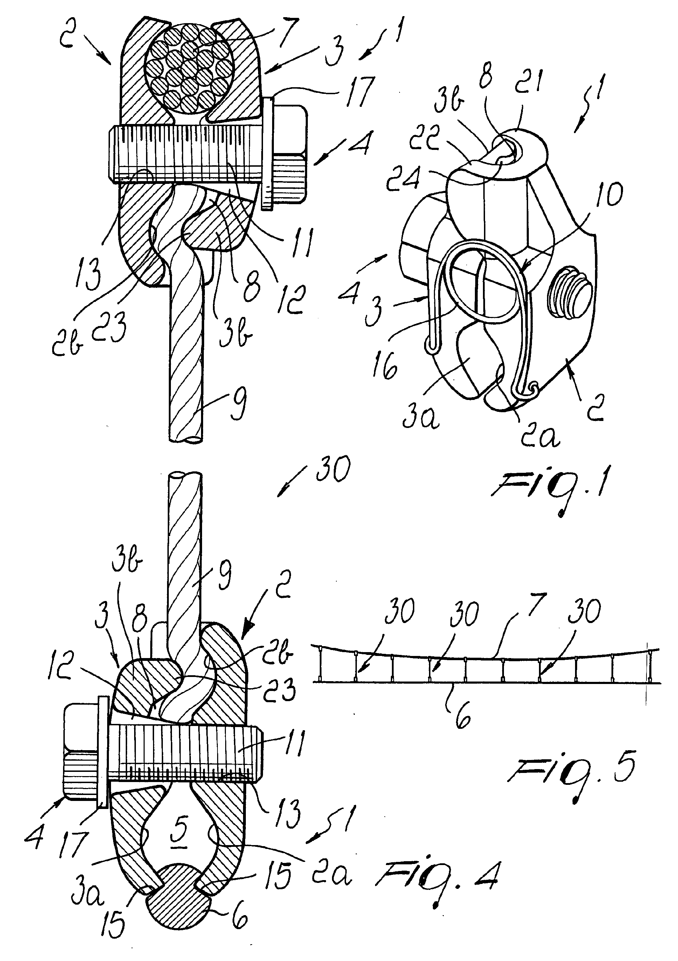

Figure 1 is a perspective view of the clamp according to the invention;

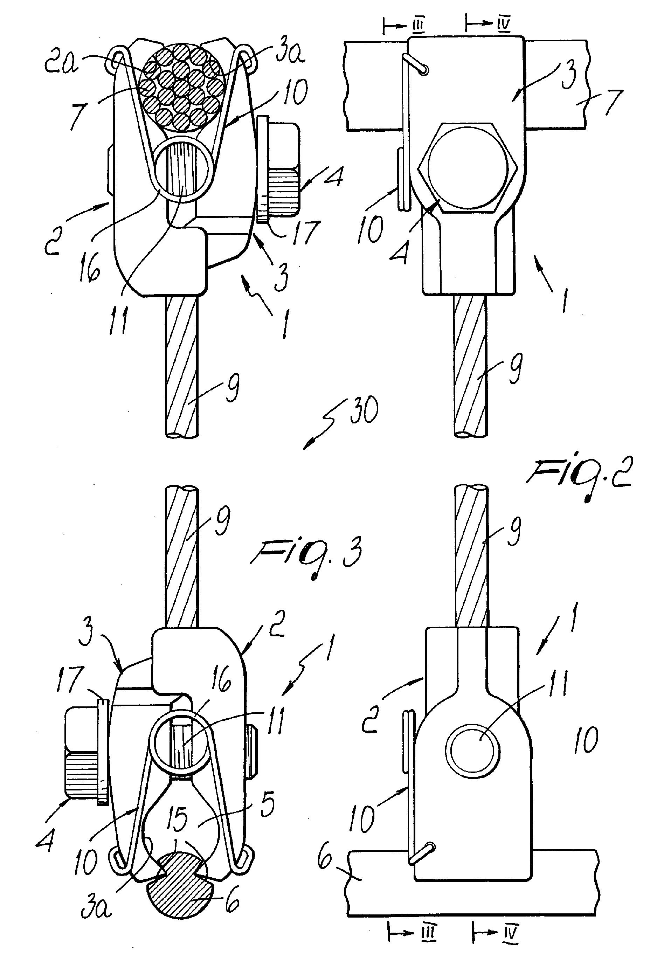

Figure 2 is a view of a dropper provided by means of two clamps according to the invention, applied to a catenary cable and to a contact wire;
Figure 3 is a sectional view of Figure 2, taken along the line III-III;
Figure 4 is a sectional view of Figure 2, taken along the line IV-IV;
Figure 5 is a schematic view of a portion of an electric railroad power supply line.

With reference to the figures, the clamp according to the invention, generally designated by the reference numeral 1, comprises two bodies, respectively a first body 2 and a second body 3, which face each other and are mutually connected, in an intermediate region of their extension along one direction, by a connection and fastening element 4.

The two bodies 2 and 3 form, proximate to one of their ends along said direction, a first engagement region for a first cable or rod element 6, 7 and, proximate to the opposite end, a second engagement region for a second cable or rod element 9, whose axis is orientated substantially at right angles to the first element 6 and 7.

At least one of the two bodies 2 and 3 (in the illustrated embodiment, the second body 3), when the connection and fastening element 4 is not fastened, can rotate with respect to the other body, which in the illustrated embodiment is constituted by the first body 2, about an axis that lies proximate to one of the two ends at which there are the engagement regions for the cable or rod elements, in order to move the bodies 2 and 3 mutually closer or further apart at the opposite end.

The connection and fastening element 4 can be moved in order to move the two bodies 2 and 3 mutually closer, so as to stably fasten the cable or rod elements 6 and 7 between the two bodies 2 and 3.

Conveniently, the clamp according to the invention also comprises elastic means 10, which contrast elastically the rotation in one direction of one of the two bodies, which in the illustrated embodiment is constituted by the second body 3, with respect to the other body, which in the illustrated embodiment is constituted by the first body 2.

More particularly, the connection and fastening element 4 comprises a screw 11 whose head is hexagonal or otherwise shaped; said screw passes through a through hole 12 formed in an intermediate region of the extension of the second body 3 and couples to a threaded hole 13 formed in an intermediate region of the extension of the first body 2. The screw 11 has an axis that is substantially perpendicular to the two mutually facing faces of the bodies 2 and 3. The hole 12 is flared and tapers gradually toward the first body 2, so as to allow the second body 3 to rotate with respect to the first body 2 about an axis that lies proximate to one of the two ends of the bodies 2 and 3 in contrast with, or by way of the action of, the elastic means 10.

An elastic washer 17 can be interposed between the head of the screw 11 and the outer face of the body 3.

The first engagement region is constituted by two recesses 2a, 3a, which are formed proximate to one of the ends of the bodies 2 and 3 on the mutually facing faces of such bodies. The recesses 2a, 3a delimit a substantially cylindrical seat 5 which can be engaged by a cable or rod element, such as for example the support and electric power supply catenary cable 7 of railroad lines. The axis of the seat 5 is substantially parallel to the rotation axis of the second body 3 with respect to the first body 2.

The second engagement region is constituted by a seat 8, which is delimited by a recess 2b formed on the face of the body 2 that faces the body 3, and by an end portion 3b of the body 3, which faces said recess 2b.

The recess 2b is delimited laterally by two wings 21, 22 of the body 2 which face each other and are blended with the bottom of the recess 2b. The end portion 3b of the body 3 is inserted between these two wings 21, 22, also preventing the rotation of the body 3 with respect to the body 2 about the axis of the screw 11.

The seat 8 can be engaged by the second cable or rod element 9, which is constituted for example by the dropper wire.

Advantageously, the end portion 3b has a protrusion 23 that protrudes toward the bottom of the recess 2b, so as to kink the cable or rod element 9 when it is fastened in the seat 8.

In a central region of the protrusion 23 there is a recess 24 for increasing the adhesion of the end portion 3b to the element 9.

Conveniently, the ends of the bodies 2 and 3, proximate to the first engagement seat 5a, are jaw-shaped so as to mate with the longitudinal slots 15 usually provided in contact wires 6 for the pantographs of electric locomotives.

The elastic means 10 comprise a coiled wire spring 16, which engages the faces of the bodies 2 and 3 that lie opposite the mutually facing faces, so as to contrast the rotation of the second body 3 with respect to the first body 2 in the direction that widens the first seat 5. The ends of the spring 16 are inserted in holes formed in the outer faces of the bodies 2 and 3, which effectively avoid the accidental disengagement of the spring 16 of the bodies 2 and 3 during use.

Advantageously, the surface of the first recesses 2a and 3a, of the recess 2b and of the protrusion 23 meant to make contact with the catenary cable 7 and the dropper wire 9, is knurled in order to increase contact with the cable or rod element to which they adhere.

Conveniently, if the clamp according to the invention is meant to provide droppers which in addition to supporting the contact wire also provide the electrical connection between the contact wire and the catenary cable, the bodies 2 and 3 are made of electrically conducting material.

By using two clamps according to the invention it is possible to provide a dropper 30 for railroad lines simply by inserting in the seats 8 of the two clamps a dropper wire 9, as will become better apparent hereinafter.

The installation of the dropper 30 provided by means of two clamps according to the invention can be performed as follows.

One of the two clamps, with the screw 11 suitably loosened, is engaged by means of its seat 5 with the catenary cable 7, overcoming the elastic reaction of the spring 16. The elastic reaction of the spring 16 therefore causes the clamp to fasten around the catenary cable 7, while the coupling between the second body 3 of the clamp and the screw 11 allows the second body 3 to rotate, while resting against the catenary cable 7, about an axis that is parallel to said catenary cable 7, thus allowing to move mutually apart the two opposite ends of the bodies 2 and 3 and thus widen the seat 8, through which it is possible to insert the end region of a dropper wire 9. Once the dropper wire 9 has been placed in the seat 8, the screw 11 is tightened while fixing the clamp to the catenary cable 7 and the dropper wire 9 to the clamp.

Another clamp, with the screw 11 suitably loosened, is engaged, by overcoming the elastic reaction of the spring 16, with its jaw-like ends, proximate to which the seat 5 is provided, with the longitudinal slots 15 of the contact wire 6. The elastic reaction of the spring 16 keeps the clamp engaged with the wire 6, while it is possible to move mutually apart the opposite ends of the bodies 2 and 3 in order to insert, between these ends, the other end region of the dropper wire 9. Once the dropper wire 9 has been inserted, the screw 11 is tightened, firmly locking the clamp both to the dropper wire 9 and to the contact wire 6.

In practice it has been found that the clamp according to the invention fully achieves the intended aim and objects, since it allows to produce droppers without requiring preassembly with the dropper wire.

By virtue of this fact, the production costs of droppers are reduced, it is possible to replace the dropper wires if their length does not match the required length, and to cut on-site, if necessary, segments of dropper wire of the required length.

Moreover, the presence of the spring that keeps the clamp engaged on the contact wire or on the catenary cable makes it particularly easy to install the dropper, preventing the accidental fall of the clamp during the assembly of the dropper wire.

Another advantage of the clamp according to the invention, which arises from the possibility to assemble the droppers directly during installation, is that it is possible to transport segments of dropper wire, which are considerably more compact than those preassembled with the clamps, of a known type.

The clamp thus conceived is susceptible of numerous modifications and variations, all of which are within the scope of the inventive concept; all the details may further be replaced with other technically equivalent elements.

In practice, the materials employed, so long as they are compatible with the specific use, as well as the dimensions, may be any according to requirements and to the state of the art.

The disclosures in Italian Patent Application No. MI2001A000572 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A clamp for droppers of catenary cables for support and electric power supply in railroad lines, **characterized in that** it comprises two bodies, respectively a first body and a second body, which face each other and are mutually connected, in an intermediate region of their extension along one direction, by a connection and fastening element; said two bodies forming, proximate to one of their ends along said direction, a first engagement region for a first cable or rod element and, proximate to the opposite end, a second engagement region for a second cable or rod element whose axis is orientated substantially at right angles to said first cable or rod element; one of said two bodies, when said connection and fastening element is not fastened, being able to rotate with respect to the other body about an axis that lies proximate to one of said two ends in order to move mutually closer or further apart said bodies at the opposite end; said connection and fastening element being movable in order to move said two bodies mutually closer so as to stably fasten said cable or rod elements between said two bodies.

2. The clamp according to claim 1, **characterized in that** it comprises elastic means that elastically contrast the rotation in one direction of one of said bodies with respect to the other body.

3. The clamp according to claims 1 and 2, **characterized in that** said connection and fastening element comprises a screw that passes through a through hole formed in an intermediate region of the extension of said second body and couples to a threaded hole formed in an intermediate region of the extension of said first body, said screw having an axis that is substantially perpendicular to the two mutually facing faces of said two bodies, said through hole having a flared shape which tapers toward said first body, in order to allow said second body to rotate with respect to said first body about said axis that lies proximate to one of said two ends in contrast with, or by way of the action of, said elastic means.

4. The clamp according to one or more of the preceding claims, **characterized in that** said first engagement region is formed by two first recesses provided, proximate to one of said ends of said bodies, on the mutually facing faces of said bodies, said two first recesses delimiting a first substantially cylindrical seat that can be engaged by said first cable or rod element with an axis that is parallel to the rotation axis of said second body with respect to said first body.

5. The clamp according to one or more of the preceding claims, **characterized in that** said second engagement region is constituted by a second seat which is delimited by a second recess formed on the face of said first body that is directed toward said second body proximate to the other end of said first body and by a portion of said second body that faces said second recess, said second seat being engageable by said second cable or rod element orientated so that its axis is substantially perpendicular to the rotation axis of said second body with respect to said first body.

6. The clamp according to one or more of the preceding claims, **characterized in that** the ends of said bodies proximate to said first engagement seat are jaw-shaped so as to mate with the longitudinal slots for supporting the contact conductor for pantographs of electric locomotives.

7. The clamp according to one or more of the preceding claims, **characterized in that** said elastic means contrast elastically the rotation of said second body with respect to said first body in the direction that moves mutually apart the ends of said bodies that delimit said first engagement seat.

8. The clamp according to one or more of the preceding claims, **characterized in that** said elastic means comprise a coiled wire spring which engages the faces of said bodies that are opposite with respect to the faces in which said first recesses are formed in order to contrast the rotation of said second body with respect to said first body in the direction that causes a widening of said first engagement seat.

9. The clamp according to one or more of the preceding claims, **characterized in that** the regions of said bodies that are meant to make contact with said first cable or rod element and/or said second cable or rod element are knurled.

10. The clamp according to one or more of the preceding claims, **characterized in that** the portion of said second body that faces said second recess of said first body has a protrusion that protrudes toward the bottom of said second recess in order to kink the cable or rod element inserted in said second seat when said connection and fastening means are fastened.

11. The clamp according to one or more of the preceding claims, **characterized in that** said first body and said second body mutually engage, in a region that is spaced from the axis of said screw, in order to prevent the rotation of one body with respect to the other about the axis of said screw.

12. The clamp according to one or more of the preceding claims, **characterized in that** said second recess of the first body is delimited laterally by two mutually facing wings which are mutually blended at the bottom of said second recess, said portion of the second body that faces said second recess being inserted between said wings.

13. The clamp according to one or more of the preceding claims, **characterized in that** said first body and said second body are made of electrically conducting material.
